# EUROPEAN PATENT APPLICATION

(11) **EP 4 231 747 A1**
(43) Date of publication of application: **23.08.2023**
(21) Application number: 20957701.4
(22) Date of filing: 15.10.2020
(51) Int. Cl.: H04W 72/04, H04W 72/12

(54) **TERMINAL**

(71) Applicant: NTT DOCOMO, INC., Tokyo 100-6150 (JP)
(72) Inventor: TAKAHASHI Yuki, Tokyo 100-6150 (JP); KUMAGAI Shinya, Tokyo 100-6150 (JP); NAGATA Satoshi, Tokyo 100-6150 (JP)
(74) Representative: Hoffmann Eitle
(86) International application number: PCT/JP2020/038987
(87) International publication number: WO 2022/079872

(57) **Abstract**

A terminal comprising: a control unit that multiplexes an uplink control information on an uplink shared channel; and a communication unit that transmits an uplink signal using the uplink shared channel on which the uplink control information is multiplexed; wherein the control unit multiplies a number of bits constituting the uplink control information by a factor in a rate matching, and the control unit applies an extended range including at least one of a value smaller than a predetermined range and a value larger than the predetermined range as the range in which the factor can be taken.

## Description

### [Technical Field]

The present disclosure relates to a terminal that performs radio communication, particularly a terminal that performs multiplexing of uplink control information for an uplink shared channel.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

Release 15 of 3GPP supports multiplexing of two or more uplink channels (PUCCH (Physical Uplink Control Channel) and PUSCH (Physical Uplink Shared Channel)) transmitted in the same slot.

In addition, Release 17 of 3GPP agreed to support multiplexing to UL SCH (Uplink Shared Channel) with a different priority than UCI (Uplink Control Information) (For example, Non-Patent Literature 1).

### [Citation List]

### [Non-Patent Literature]

Non-Patent Literature 1 "Enhanced Industrial Internet of Things (IoT) and ultra-reliable and low latency communication," RP-201310, 3GPP TSG RAN Meeting #86 e, 3GPP, July 2020

### [Summary of Invention]

Against this background, the inventors, after careful consideration, found that multiplexing of UCIs for UL SCH could not be properly performed if the possible values of the coefficients used for rate matching (For example, beta) remained in the predetermined range.

Therefore, the following disclosure has been made in view of this situation, and the purpose of the disclosure is to provide a terminal that can properly execute multiplexing of uplink control information for an uplink shared channel.

An aspect of the disclosure is a terminal comprising: a control unit that multiplexes an uplink control information on an uplink shared channel; and a communication unit that transmits an uplink signal using the uplink shared channel on which the uplink control information is multiplexed; wherein the control unit multiplies a number of bits constituting the uplink control information by a factor in a rate matching, and the control unit applies an extended range including at least one of a value smaller than a predetermined range and a value larger than the predetermined range as the range in which the factor can be taken.

### [Brief Description of Drawings]

Fig.1: Fig.1 is an overall schematic diagram of radio communication system 10.
Fig.2: Fig.2 is a diagram showing the frequency range used in radio communication system 10.
Fig.3: Fig.3 is a diagram showing an example configuration of the radio frame, subframe and slot used in radio communication system 10.
Fig.4: Fig.4 is a functional block configuration diagram of the UE 200.
Fig.5: Fig.5 is a diagram for explaining rate matching.
Fig.6: Fig.6 is a diagram for illustrating rate matching.
Fig.7: Fig.7 is a diagram for illustrating rate matching.
Fig.8: Fig.8 is a diagram showing an example of the possible range of coefficients (beta).
Fig.9: Fig.9 is a diagram showing an example of the possible range of coefficients (beta).
Fig.10: Fig.10 is a diagram showing an example of the possible range of coefficients (beta).
Fig.11: Fig.11 is a diagram showing an example of the possible range of coefficients (beta).
Fig.12: Fig.12 is a diagram showing an example of the possible range of coefficients (beta).
Fig.13: Fig.13 is a diagram showing an example of the possible range of coefficients (beta).
Fig.14: Fig.14 is a diagram showing an example of the possible range of coefficients (beta).
Fig.15: Fig.15 is a diagram showing an example of an information element (ASN-1 format) included in an RRC message.
Fig.16: Fig.16 shows an example of an information element (ASN-1 format) contained in an RRC message.
Fig.17: Fig.17 shows an example of an information element (ASN-1 format) contained in an RRC message.
Fig.18: Fig.18 shows an example of an operation.
Fig.19: Fig.19 shows an example of the hardware configuration of the UE 200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### [Embodiment]

### (1) Overall schematic configuration of the radio communication system

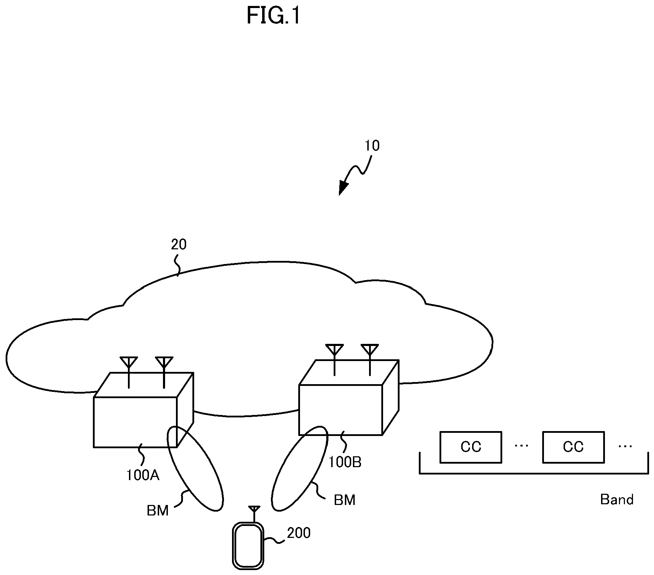

Fig.1 is an overall schematic diagram of a radio communication system 10 according to the embodiment. The radio communication system 10 is a radio communication system according to 5G New Radio (NR) and includes a Next Generation-Radio Access Network 20 (herein below referred to as NG-RAN 20) and a terminal 200 (herein below referred to as UE 200).

The radio communication system 10 may be a radio communication system according to a scheme called Beyond 5G, 5G Evolution or 6 G.

The NG-RAN 20 includes a radio base station 100A (herein below referred to as gNB 100A) and a radio base station 100B (herein below referred to as gNB 100B). The specific configuration of radio communication system 10 including the number of gNBs and UEs is not limited to the example shown in Fig.1.

The NG-RAN 20 actually includes multiple NG-RAN nodes, specifically, gNBs (or ng-eNBs), and is connected to a core network (5GC, not shown) according to 5G. Note that NG-RAN 20 and 5GC may simply be described as "network."

The gNB 100A and gNB 100B are radio base stations in accordance with 5G and perform radio communication in accordance with UE 200 and 5G. By controlling radio signals transmitted from multiple antenna elements, gNB 100A, gNB 100B and UE 200 can support Massive MIMO (Multiple-Input Multiple-Output) for generating more directional beam BM, carrier aggregation (CA) using multiple component carriers (CCs) bundled together, and dual connectivity (DC) for simultaneous communication between UE and each of two NG-RAN nodes. The DC may include MR-DC (Multi-RAT Dual Connectivity) using MCG (Master Cell Group) and SCG (Secondary Cell Group). Examples of MR-DC include EN-DC (E-UTRA-NR Dual Connectivity), NE-DC (NR-EUTRA Dual Connectivity) and NR-DC (NR-NR Dual Connectivity). Here, CC (cell) used in CA may be considered to constitute the same cell group. MCG and SCG may be considered to constitute the same cell group.

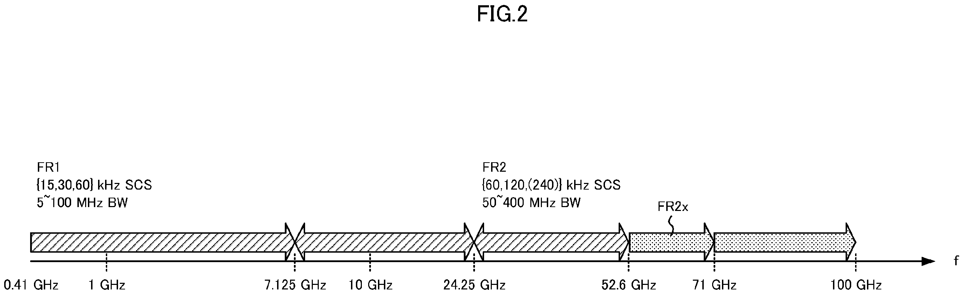

The radio communication system 10 also supports multiple frequency ranges (FRs). Fig.2 shows the frequency range used in radio communication system 10.

As shown in Fig.2, radio communication system 10 corresponds to FR1 and FR2. The frequency bands of each FR are as follows:
▪FR 1: 410 MHz to 7.125 GHz
▪FR 2: 24.25 GHz to 52.6 GHz
FR 1 uses sub-carrier spacing (SCS) of 15, 30 or 60 kHz and may use a bandwidth (BW) of 5 ~ 100 MHz. FR 2 is a higher frequency than FR 1 and an SCS of 60 or 120 kHz (240 kHz may be included) may be used and a bandwidth (BW) of 50 ~ 400 MHz may be used.

SCS may be interpreted as numerology. Numerology is defined in 3GPP TS 38.300 and corresponds to one subcarrier interval in the frequency domain.

In addition, the radio communication system 10 corresponds to a higher frequency band than that of FR 2. Specifically, radio communication system 10 corresponds to a frequency band above 52.6 GHz and up to 114.25 GHz. Such a high frequency band may be referred to as "FR 2 x" for convenience.

To solve such problems, Cyclic Prefix-Orthologous Frequency Division Multiplexing (CP-OFDM)/Discrete Fourier Transform-Spread (DFT-S-OFDM) with larger Sub-Carrier Spacing (SCS) may be applied when using a band exceeding 52.6 GHz.

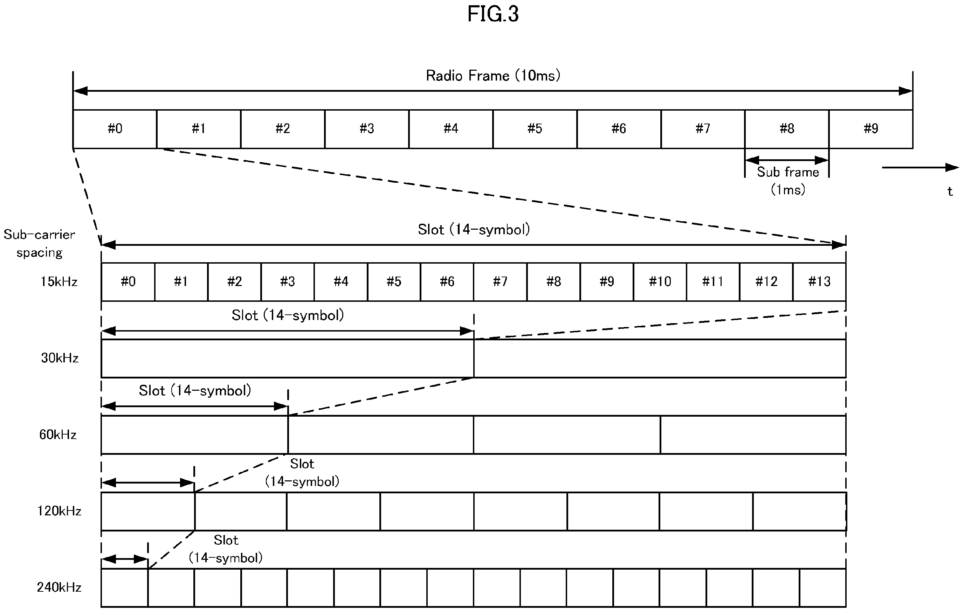

Fig.3 shows an example configuration of the radio frame, subframe and slot used in radio communication system 10.

As shown in Fig.3, one slot consists of 14 symbols, and the larger (wider) the SCS, the shorter the symbol period (and slot period). The SCS is not limited to the interval (frequency) shown in Fig.3. For example, 480 kHz, 960 kHz, etc., may be used.

In addition, the number of symbols constituting 1 slot need not necessarily be 14 symbols (For example, 28, 56 symbols). Furthermore, the number of slots per subframe may vary depending on the SCS.

Note that the time direction (t) shown in Fig.3 may be referred to as a time domain, symbol period or symbol time. The frequency direction may also be referred to as a frequency domain, resource block, subcarrier or BWP (Bandwidth Part).

### (2) Function block configuration of radio communication system

Next, the functional block configuration of radio communication system 10 will be described. Specifically, the functional block configuration of the UE 200 will be described.

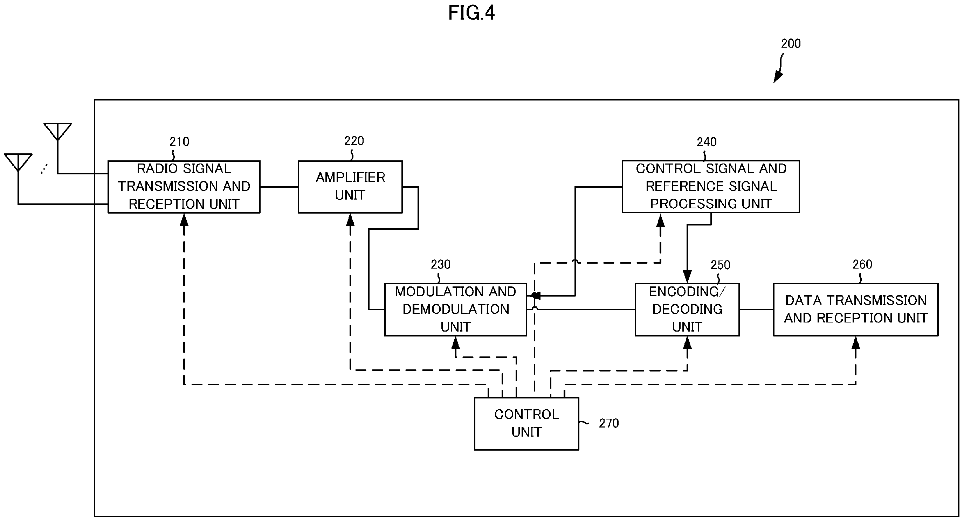

Fig.4 is a functional block configuration diagram of the UE 200. As shown in Fig.4, the UE 200 comprises a radio signal transmission and reception unit 210, an amplifier unit 220, a modulation and demodulation unit 230, a control signal and reference signal processing unit 240, an encoding/decoding unit 250, a data transmission and reception unit 260 and a control unit 270.

The radio signal transmission and reception unit 210 transmits and receives radio signals in accordance with NR. The radio signal transmission and reception unit 210 supports Massive MIMO, CA for bundling multiple CCs, and DC for simultaneously communicating between UE and each of the 2 NG-RAN nodes.

The amplifier unit 220 will consist of a Power Amplifier (PA), a Low Noise Amplifier (LNA) and other components. The amplifier unit 220 amplifies the signal output from modulation and demodulation unit 230 to a predetermined power level. The amplifier unit 220 also amplifies the RF signal output from the radio signal transmission and reception unit 210.

The modulation and demodulation unit 230 performs data modulation/demodulation, transmission power setting and resource block allocation for each predetermined communication destination (gNB 100 or other gNB). On the modulation and demodulation unit 230, Cyclic Prefix-Orthogonal-Frequency Division Multiplexing (CP-OFDM)/Discrete Fourier Transform-Spread (DFT-S-OFDM) may be applied. DFT-S-OFDM may be used not only for the uplink (UL) but also for the downlink (DL).

The control signal and reference signal processing unit 240 performs processing for various control signals transmitted and received by the UE 200 and processing for various reference signals transmitted and received by the UE 200.

Specifically, the control signal and reference signal processing unit 240 receives various control signals transmitted from the gNB 100 via a predetermined control channel, such as control signals of a radio resource control layer (RRC). The control signal and reference signal processing unit 240 also transmits various control signals toward the gNB 100 via a predetermined control channel.

The control signal and reference signal processing unit 240 performs processing using a reference signal (RS) such as a Demodulation Reference Signal (DMRS) and a Phase Tracking Reference Signal (PTRS).

DMRS is a known reference signal (pilot signal) between individual base stations and terminals for estimating a fading channel used for data demodulation. PTRS is a reference signal for individual terminals for estimating phase noise, which is a problem in high frequency bands.

In addition to DMRS and PTRS, the reference signal may include Channel State Information-Reference Signal (CSI-RS), Sounding Reference Signal (SRS), and Positioning Reference Signal (PRS) for location information.

The channel also includes a control channel and a data channel. The control channels include PDCCH (Physical Downlink Control Channel), PUCCH (Physical Uplink Control Channel), RACH (Random Access Channel), Downlink Control Information (DCI) including Random Access Radio Network Temporary Identifier (RA-RNTI), and Physical Broadcast Channel (PBCH).

The data channels include PDSCH (Physical Downlink Shared Channel) and PUSCH (Physical Uplink Shared Channel). Data means data transmitted through a data channel. A data channel may be read as a shared channel.

In an embodiment, the control signal and reference signal processing unit 240 constitutes a communication unit that transmits an uplink signal using a UL SCH (Uplink Shared Channel) multiplexed with Uplink Control Information (UCI). UL SCH is a transport channel multiplexed with a Physical Uplink Shared Channel (PUSCH). Uplink signals transmitted via UL SCH (PUSCH) may include UCI or may include data. UCI may include an acknowledgment (HARQ-ACK) for one or more TBs. UCI may include a Scheduling Request (SR) that requests scheduling of resources, or a Channel State Information (CSI) that represents the state of the channel. UCI may be transmitted via PUCCH or PUSCH.

The encoding/decoding unit 250 performs data division/concatenation and channel coding/decoding, etc. for each predetermined communication destination (gNB 100 or other gNB).

Specifically, the encoding/decoding unit 250 divides the data output from the data transmission and reception unit 260 into predetermined sizes and performs channel coding on the divided data. The encoding/decoding unit 250 also decodes the data output from the modulation and demodulation unit 230 and concatenates the decoded data.

The data transmission and reception unit 260 transmits and receives Protocol Data Units (PDU) and Service Data Units (SDU). Specifically, the data transmission and reception unit 260 performs assembly/disassembly of PDUs/SDUs in multiple layers (Media access control layer (MAC), radio link control layer (RLC), and packet data convergence protocol layer (PDCP), etc.). data transmission and reception unit 260 also performs error correction and retransmission control of data based on a hybrid automatic repeat request (ARQ).

The control unit 270 controls each functional block that constitutes the UE 200. In particular, in an embodiment, the control unit 270 constitutes a control unit that multiplexes UCIs on the UL SCH. In rate matching of the UCI, the control unit 270 multiplies the number of bits constituting the UCI by a coefficient (beta). The control unit 270 applies an extended range in which beta can include at least one of values smaller than the predetermined range and larger than the predetermined range. The predetermined range may be considered to be the range defined in Release 16 of 3GPP. The extended range may be considered to be the range defined in Release 17 of 3GPP.

### (3) Rate matching

Rate matching is described below. Specifically, rate matching of UCI in the case of multiplexing UCI to UL SCH is described. Here, examples of UCI are HARQ-ACK, CSI Unit 1 and CSI Unit 2. HARQ-ACK, CSI-Unit 1 and CSI-Unit 2 are executed separately.

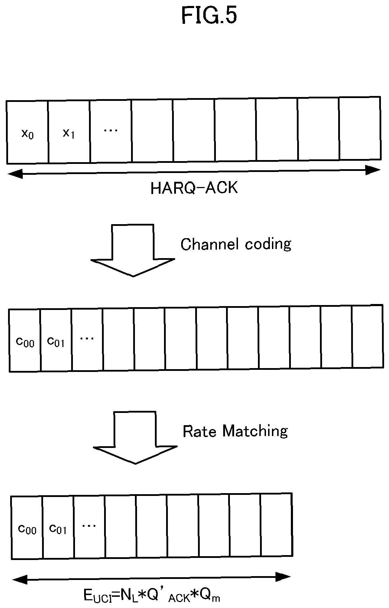

As shown in Fig.5, bit sequences of "C₀₀, C01 and ..." are obtained by applying channel coding to HARQ-ACK having bit sequences of "Xo, X₁ and ..." Rate matching is applied to such bit sequences. The bit sequence (E_{UCI}) after rate matching may be represented by E_{UCI} = N_{L} * Q'_{ACK} * Qₘ.

N_{L} is the number of transmit layers of PUSCH. Qₘ is the modulation condition of PUSCH. For example, Q'_{ACK} is expressed by the following equation (TS 38.212 V 16.3.0 section 6.3.2.4.1.1 "HARQ-ACK") :
$Q {′}_{ACK} = min \left\{⌈ \frac{\left({O}_{ACK}+{L}_{ACK}\right) ⋅ {β}_{offset}^{PUSCH} ⋅ {\sum }_{l = 0}^{{N}_{symb , all}^{PUSCH} - 1} {M}_{sc}^{UCI} \left(l\right)}{{\sum }_{r = 0}^{{C}_{UL - SCH} - 1} {K}_{r}} ⌉, ⌈ α ⋅ {\sum }_{l = 0}^{{N}_{symb , all}^{PUSCH} - 1} {M}_{sc}^{UCI} \left(l\right) ⌉\right\}$
*O_{ACK}* is the number HARQ-ACK bits.
*L_{ACK}* is the number of bis in CRC applied for HARQ-ACK. ${β}_{offset}^{PUSCH}$ is ${β}_{offset}^{HARQ - ACK}$, and ${β}_{offset}^{HARQ - ACK}$ is the example of coefficient (β) multiplied to the number of HARQ-ACK bits.
${M}_{sc}^{UCI} \left(l\right)$ is the band scheduled with PUSCH transmission, represented by the number of sub-carriers.
*C_{UL-SCH}* is the number of code block of UL-SCH for PUSCH transmission.
a is the example of the scaling factor multiplied to the radio resource (here, ${M}_{sc}^{UCI} \left(l\right)$)) available for UCI transmission.

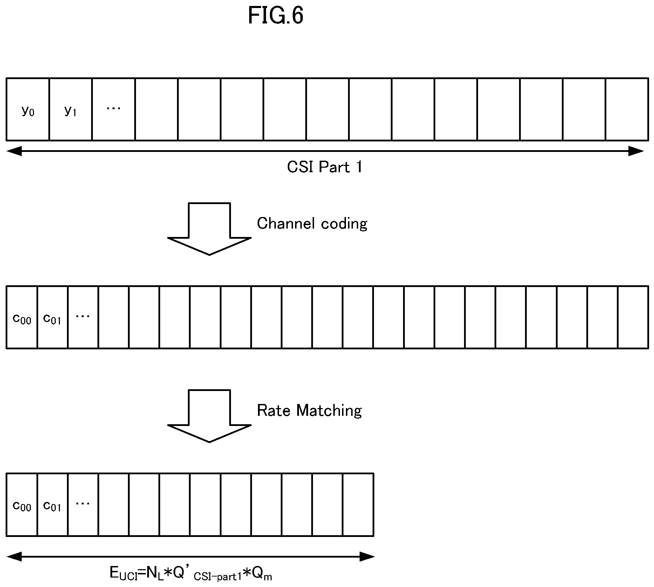

As shown in Fig.6, bit sequences of "C00, C01 and ..." are obtained by applying channel coding to CSI Unit 1 with bit sequences of "Y₀, Y₁ and ..." Rate matching is applied to such bit sequences. The bit sequence (E_{UCI}) after rate matching may be represented by E_{UCI} = N_{L} * Q'_{CSI-part1} * Qm.

N_{L} is the number of transmit layers of PUSCH. Qₘ is the modulation condition of PUSCH. For example, Q'_{CSI-unit 1} is expressed by the following equation (TS 38.212 V 16.3.0 section 6.3.2.4.1.2 "CSI unit 1"):
$Q {′}_{CSI - 1} = min \left\{\begin{matrix}⌈ \frac{\left({O}_{CSI - 1}+{L}_{CSI - 1}\right) ⋅ {β}_{offset}^{PUSCH} ⋅ {\sum }_{l = 0}^{{N}_{symb , all}^{PUSCH} - 1} {M}_{sc}^{UCI} \left(l\right)}{{\sum }_{r = 0}^{{C}_{UL - SCH} - 1} {K}_{r}} ⌉ , \\ ⌈ α ⋅ {\sum }_{l = 0}^{{N}_{symb , all}^{PUSCH} - 1} {M}_{sc}^{UCI} \left(l\right) ⌉ - Q {′}_{ACK / CGI - UCI}\end{matrix}\right\}$
*O*_{*CSI*-1} is the number CSI Part 1 bits.
*L*_{*CSI*-1} is the number of bis in CRC applied for CSI Part 1. ${β}_{offset}^{PUSCH}$ is ${β}_{offset}^{CSI - part 1}$, and ${β}_{offset}^{CSI - part 1}$ is the example of coefficient (β) multiplied to the number of CSI Part 1 bits.
${M}_{sc}^{UCI} \left(l\right)$ is the band scheduled with PUSCH transmission, represented by the number of sub-carriers.
*C_{UL-SCH}* is the number of code block of UL-SCH for PUSCH transmission.
a is the example of the scaling factor multiplied to the radio resource (here, ${M}_{sc}^{UCI} \left(l\right)$)) available for UCI transmission.

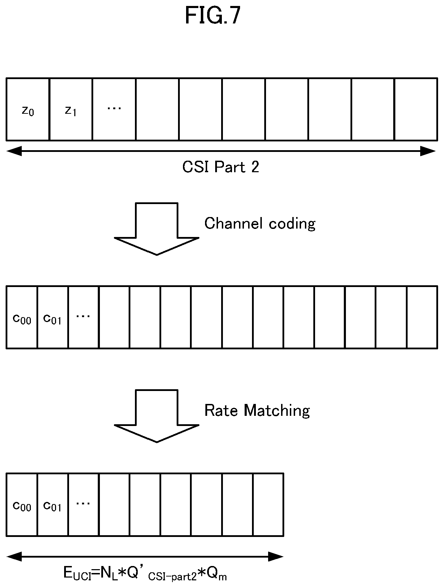

As shown in Fig.7, bit sequences of "C00, C01 and ..." are obtained by applying channel coding to CSI Unit 2 with bit sequences of "Z0, Z₁ and ..." Rate matching is applied to such bit sequences. The bit sequence (E_{UCI}) after rate matching may be represented by E_{UCI} = N_{L} * Q'_{CSI-part2} * Qₘ.

N_{L} is the number of transmit layers of PUSCH. Qₘ is the modulation condition of PUSCH. For example, Q'_{CSI-unit 2} can be expressed by the following equation (TS 38.212 V 16.3.0 section 6.3.2.4.1.3 "CSI unit 2"):
$Q {′}_{CSI - 2} = min \left\{\begin{matrix}⌈ \frac{\left({O}_{CSI - 2}+{L}_{CSI - 2}\right) ⋅ {β}_{offset}^{PUSCH} ⋅ {\sum }_{l = 0}^{{N}_{symb , all}^{PUSCH} - 1} {M}_{sc}^{UCI} \left(l\right)}{{\sum }_{r = 0}^{{C}_{UL - SCH} - 1} {K}_{r}} ⌉ , \\ ⌈ α ⋅ {\sum }_{l = 0}^{{N}_{symb , all}^{PUSCH} - 1} {M}_{sc}^{UCI} \left(l\right) ⌉ - Q {′}_{ACK / CGI - UCI} - Q {′}_{CSI - 1}\end{matrix}\right\}$
*O*_{*CSI*-2} is the number CSI Part 2 bits.
*L*_{*CSI*-2} is the number of bis in CRC applied for CSI Part 2. ${β}_{offset}^{PUSCH}$ is ${β}_{offset}^{CSI - part 2}$, and ${β}_{offset}^{CSI - part 2}$ is the example of coefficient (β) multiplied to the number of CSI Part 2 bits.
${M}_{sc}^{UCI} \left(l\right)$ is the band scheduled with PUSCH transmission, represented by the number of sub-carriers.
*C_{UL-SCH}* is the number of code block of UL-SCH for PUSCH transmission.
α is the example of the scaling factor multiplied to the radio resource (here, ${M}_{sc}^{UCI} \left(l\right)$)) available for UCI transmission.

### (4) Possible range of coefficients (beta)

The possible range of coefficients (beta) is described below. Here, coefficients (beta) applied to HARQ-ACK are used as an example.

### (4.1) Default range

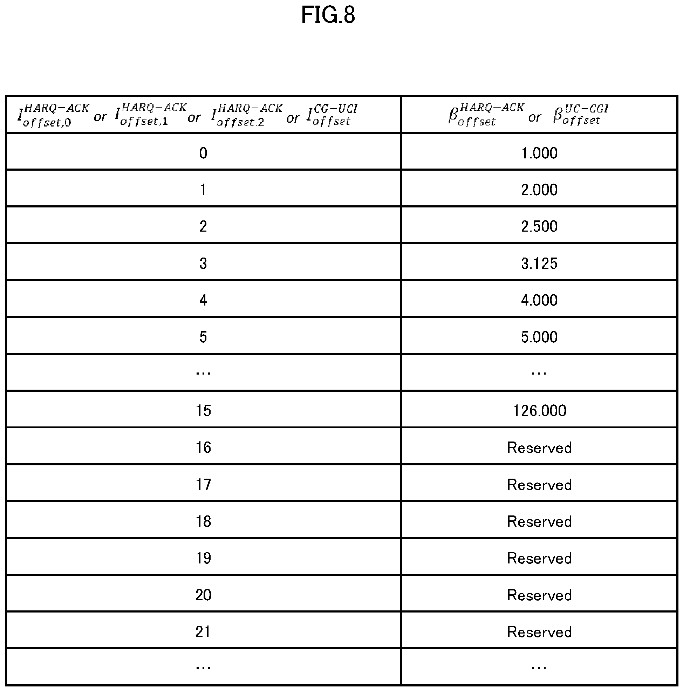

As shown in Fig.8, for the default range, the coefficient (beta) shown in the right column corresponds to the index shown in the left column (TS 38.213 V 16.3.0 section 9.3 "UCI reporting in physical uplink shared channel"). For example, the minimum possible value of the coefficient (beta) in the default range is "1.000," and the maximum possible value of the coefficient (beta) in the default range is "126.000." Indexes above 16 have no associated coefficient (beta) and can be used for future expansion (Reserved). As noted above, the default range is the range defined in Release 16 of 3GPP.

### (4.2) Extended range example 1

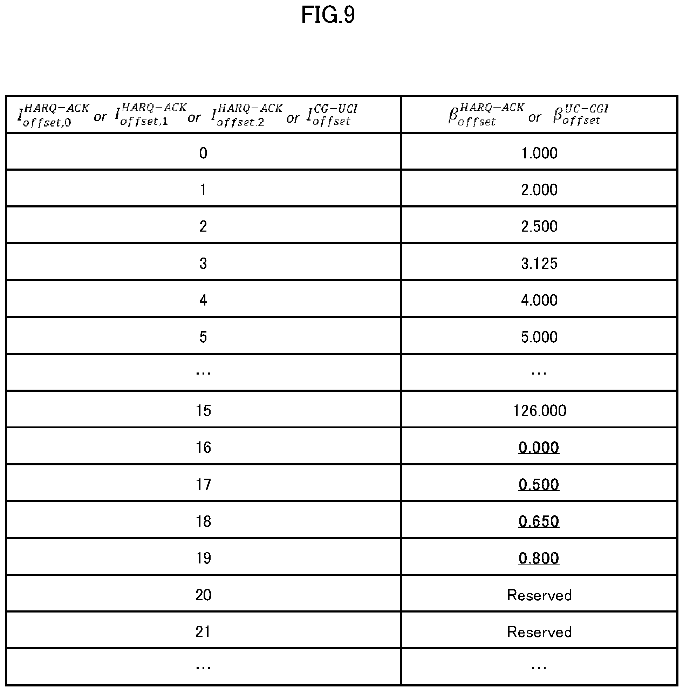

As shown in Fig.9, for Extended range example 1, the coefficient (beta) shown in the right column corresponds to the index shown in the left column as in the default range. For example, Extended range example 1 includes a value (Here, "0.000," "0.500," "0.650," "0.800") smaller than the minimum value "1.000" of the possible values of the coefficient (beta) in the default range. In Extended range example 1, values smaller than the default range are defined using the index that was Reserved in the default range.

### (4.3) Extended range example 2

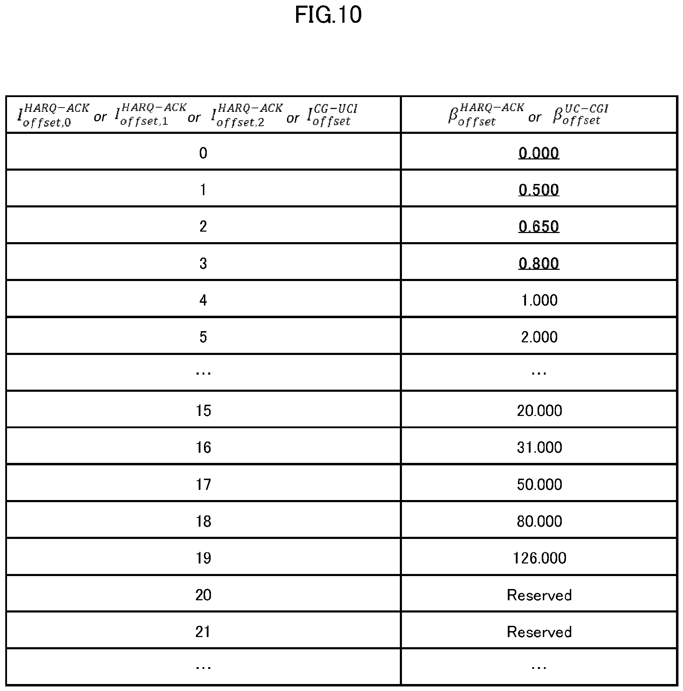

As shown in Fig.10, for Extended range example 2, similarly to the default range, the coefficient (beta) shown in the right column corresponds to the index shown in the left column. For example, Extended range example 2 includes a value (Here, "0.000," "0.500," "0.650," "0.800") smaller than the minimum value "1.000" of the possible values of the coefficient (beta) in the default range. In Extended range example 2, a new Table is defined with the coefficients (beta) sorted in ascending order.

### (4.4) Extended range example 3

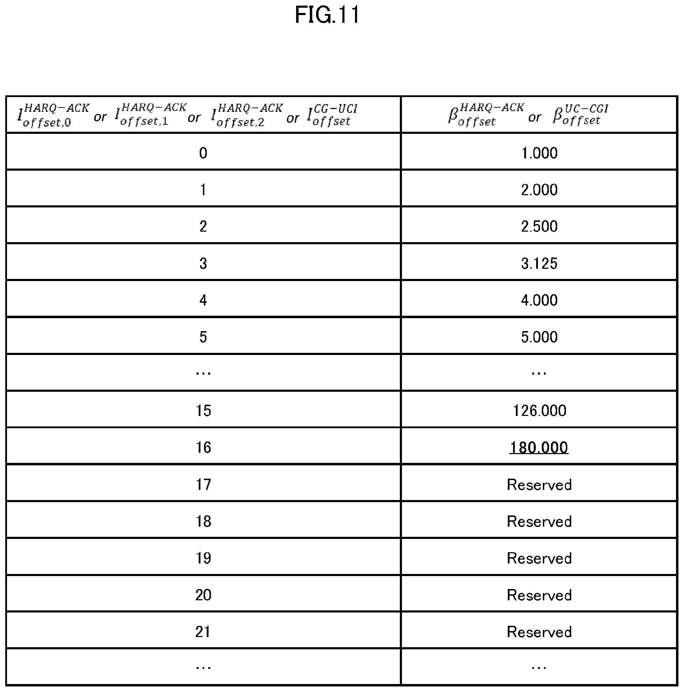

As shown in Fig.11, for Extended range example 3, the coefficient (beta) shown in the right column corresponds to the index shown in the left column as in the default range. For example, Extended range example 3 includes a value (Here, "180.000") greater than the maximum value "126.000" of the possible values of the coefficient (beta) in the default range. In Extended range example 3, a value greater than the default range is defined using an index that was Reserved in the default range.

### (4.5) Extended range example 4

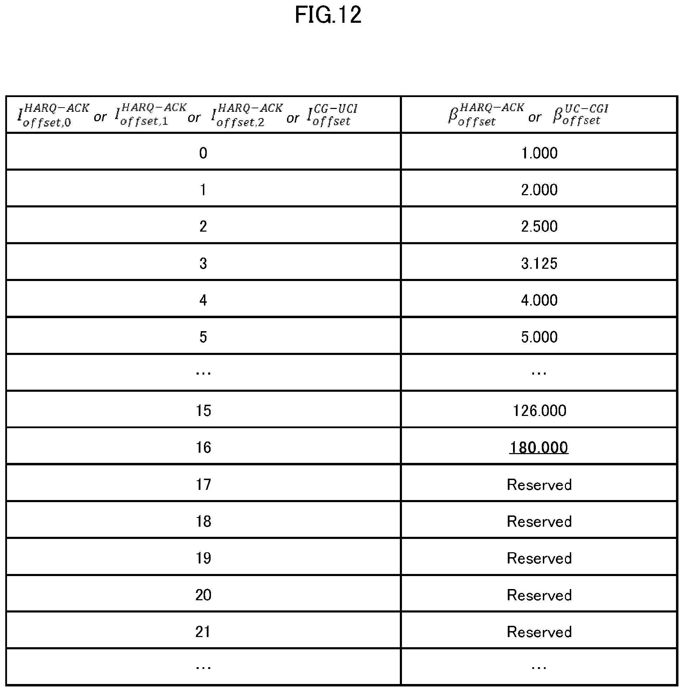

As shown in Fig.12, for Extended range example 4, the coefficient (beta) shown in the right column corresponds to the index shown in the left column as in the default range. For example, Extended range example 4 includes a value (Here, "180.000") greater than the maximum value "126.000" of the possible values of the coefficient (beta) in the default range. Extended range example 4 has the same configuration as Extended range example 3, but differs from Extended range example 3 in the sense that a new Table is defined.

### (4.6) Extended range example 5

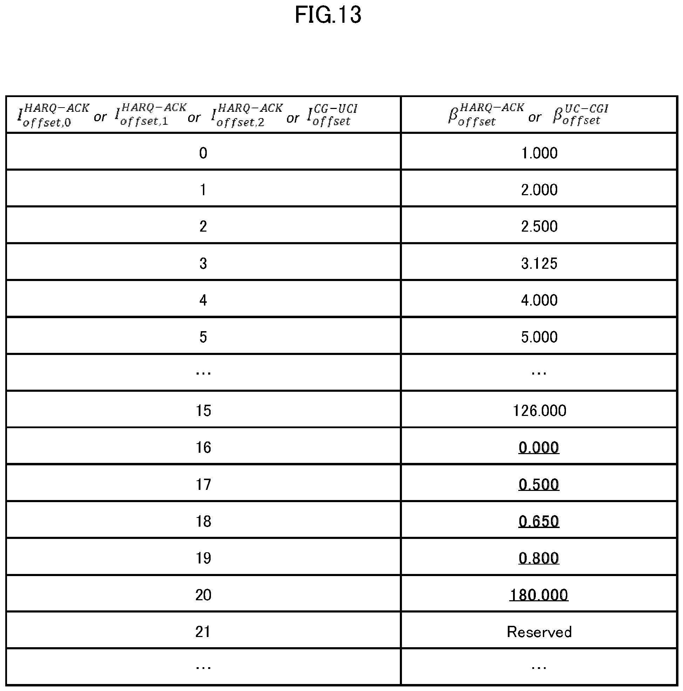

As shown in Fig.13, for Extended range example 5, the coefficient (beta) shown in the right column corresponds to the index shown in the left column as in the default range. For example, Extended range example 5 includes a value (Here, "0.000," "0.500," "0.650," "0.800") smaller than the minimum value "1.000" of the possible values of the coefficient (beta) in the default range and a value (Here, "180.000") larger than the maximum value "126.000" of the possible values of the coefficient (beta) in the default range. In Extended range example 5, values smaller than the default range and larger than the default range are defined using the index that was Reserved in the default range.

### (4.7) Extended range example 6

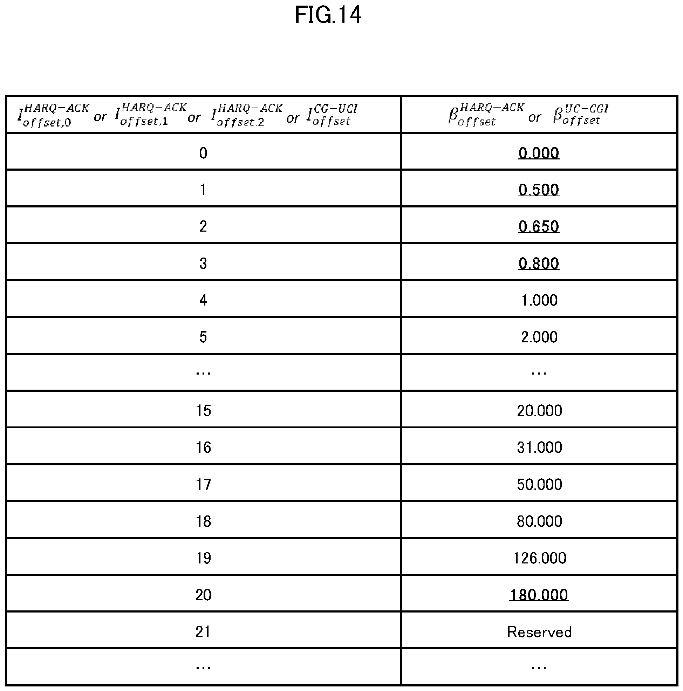

As shown in Fig.14, for Extended range example 6, the coefficient (beta) shown in the right column corresponds to the index shown in the left column as in the default range. For example, Extended range example 6 includes a value (Here, "0.000," "0.500," "0.650," "0.800") smaller than the minimum value "1.000" of the possible values of the coefficient (beta) in the default range and a value (Here, "180.000") larger than the maximum value "126.000" of the possible values of the coefficient (beta) in the default range. In Extended range example 6, a new Table is defined that is sorted in descending order of the coefficient (beta).

### (5) Examples of application of extended scope

Examples of application of extended scope are described below. The conditions required in the case of application of extended scope are described below.

### (5.1) Condition 1

Condition 1 is that there are no specific conditions required in the case of applying extended scope. For example, if an index that was Reserved in the default range is used to define either a value smaller than the default range or a value larger than the default range (The following are the extended values of beta:), an extended value of beta can be specified by an existing index. For example, the extended range shown in Figures 9, 11 and 13 may be applied without any specific conditions being required.

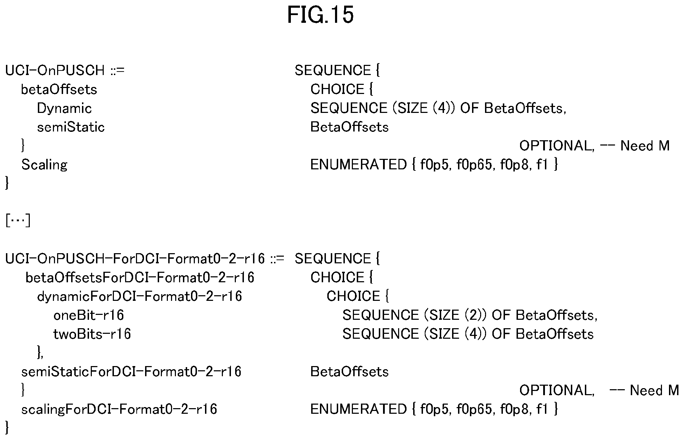

As shown in Fig.15, the RRC message used in Condition 1 may include information elements defined in Release 16 of 3GPP. The information element may include UCI-OnPUSCH or UCI-OnPUSCH-ForDCI-Format 0-2-r16. UCI-OnPUSCH may include Dynamic or semiStatic as betaOffsets specifying coefficients (beta). UCI-OnPUSCH may include Scaling specifying scaling factors (alpha) as described above. UCI-OnPUSCH-ForDCI-Format 0-2-r16 is the information element used when the format of DCI is DCI Format 0_2. UCI-OnPUSCH-ForDCI-Format 0-2-r16 may include Dynamic or semiStatic as betaOffsets specifying coefficients (beta). UCI-OnPUSCH-ForDCI-Format 0-2-r16 may include Scaling specifying scaling factors (alpha) as described above. betaOffsets are information elements indicating indices shown in Figures 9, 11 and 13 (TS 38.331 V 16.2.0 § 6.3.2 "Radio Resource Control Information elements").

### (5.2) Condition 2

Condition 2 is to be specified based on radio resource control messages (RRC messages). In other words, the UE 200 applies the extended range based on the RRC message.

For example, the RRC message may include an information element that indicates whether or not to apply the extended range. An extended range may be applied if the RRC message includes an information element that indicates that the extended range applies. An extended range may not apply if the RRC message does not include an information element that indicates that the extended range applies, or if the RRC message includes an information element that indicates that the extended range does not apply.

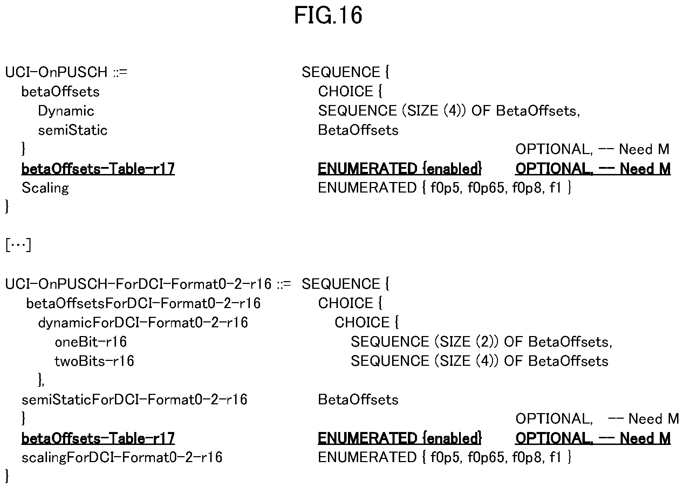

As shown in Fig.16, the RRC message used in Condition 2 may include betaOffset-Table-r17 in addition to the information elements defined in Release 16 of 3GPP. betaOffset-Table-r17 may be included in UCI-OnPUSCH or UCI-OnPUSCH-ForDCI-Format 0-2-r16. An extended range may be applied if betaOffset-Table-r17 is enabled.

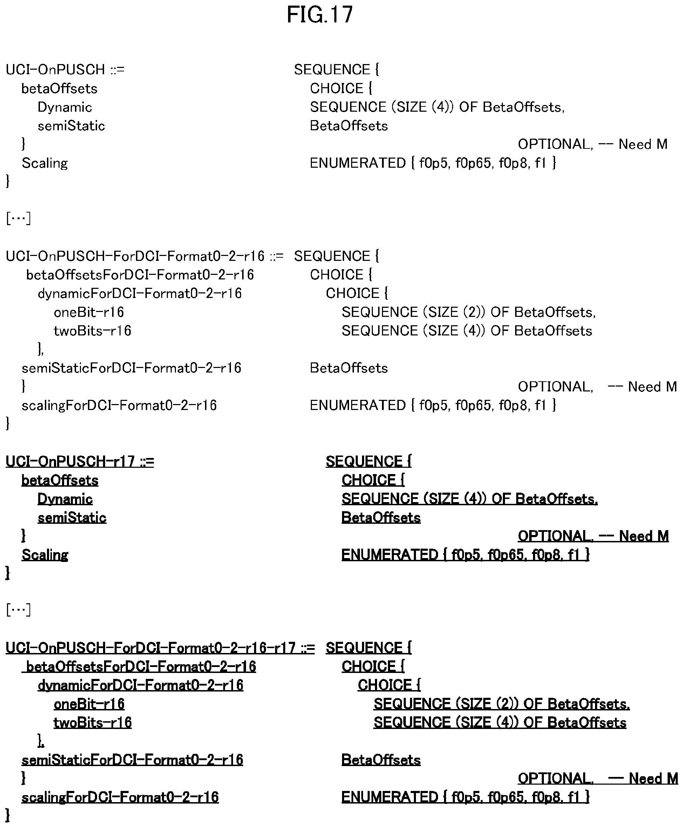

As shown in Fig.17, the RRC message used in Condition 2 may contain UCI-OnPUSCH-r17 or UCI-OnPUSCH-ForDCI-Format 0-2-r16-r17 in addition to the information elements defined in Release 16 of 3GPP. UCI-OnPUSCH-r17, like UCI-OnPUSCH, may contain Dynamic or semiStatic as betaOffsets specifying coefficients (beta). UCI-OnPUSCH-r17 may contain Scaling specifying scaling factors (alpha). UCI-OnPUSCH-ForDCI-Format 0-2-r16-r17 may contain Dynamic or semiStatic as betaOffsets specifying coefficients (beta), similar to UCI-OnPUSCH-ForDCI-Format 0-2-r16. UCI-OnPUSCH-ForDCI-Format 0-2-r16-r17 may include Scaling specifying scaling factors (alpha).

### (5.3) Condition 3

Condition 3 is that UE Capability including an information element about the application of the extended range is reported from UE 200. In other words, UE 200 applies the extended range based on UE 200 capability.

For example, the information element for the application of the extended range may be an information element indicating that the UE 200 corresponds to UCI multiplexing for an uplink channel (UL-SCH, PUSCH) with a different priority than the UCI priority. The information element for the application of the extended range may be an information element indicating that the UE 200 corresponds to the extended range.

### (5.4) Condition 4

Condition 4 is that the format of the downlink control information (DCI) is a specific format. In other words, the UE 200 applies the extended range based on the DCI. The specific format may be DCI Format 0_2.

Condition 4 may be combined with condition 2 described above. For example, extended range may be applied when betaOffset-Table-r17 contained in UCI-OnPUSCH-ForDCI-Format 0-2-r16 is enabled and the format of DCI is DCI Format 0_2. Alternatively, the extended range may be applied when UCI-OnPUSCH-ForDCI-Format 0-2-r16-r17 is included in the RRC message and the format of the DCI is DCI Format 0_2.

### (5.5) Condition 5

Condition 5 may be that the scaling factor (alpha) is greater than or equal to the first threshold and the scaling factor (alpha) is less than or equal to the second threshold. In other words, the UE 200 applies the extended range based on the value of the scaling factor (alpha).

For example, the first threshold may be the minimum value ("1.000") of the possible values of the factor (beta) in the predetermined range. If the value of alpha is greater than or equal to the minimum value, an extended range containing values smaller than the predetermined range may be applied. The second threshold may be the maximum value ("126.000") that the coefficient (beta) can take in the predetermined range. If the value of alpha is less than or equal to the maximum value, an extended range containing values greater than the predetermined range may be applied.

### (5.6) Condition 6

Condition 6 may be that the priority of the uplink control information (UCI) is different from the priority of the uplink shared channel (UL-SCH, PUSCH). In other words, the UE 200 may apply the extended range if the priority of the UCI is different from the priority of the UL-SCH.

For example, if the priority of the UCI is low and the priority of the UL-SCH is high, the extended range containing a value smaller than the predetermined range may be applied. In such a case, the priority UCI may already be multiplexed to the PUSCH (UL-SCH). If the priority of the UCI is high and the priority of the UL-SCH is low, an extended range may be applied that includes a value greater than the default range.

Note that the UE 200 may apply the default range if the priority of the UCI is the same as the priority of the UL-SCH. However, the UE 200 may apply the extended range if the UCI priority is the same as the UL-SCH priority. Cases in which the UCI priority is the same as the UL-SCH priority may include cases in which both the UCI and the UL-SCH priority is low and may include cases in which both the UCI and the UL-SCH priority is high.

### (6) Example of operation

An example of operation of the embodiment will be described below. The multiplexing of UCIs for UL-SCH (PUSCH) will be mainly described below.

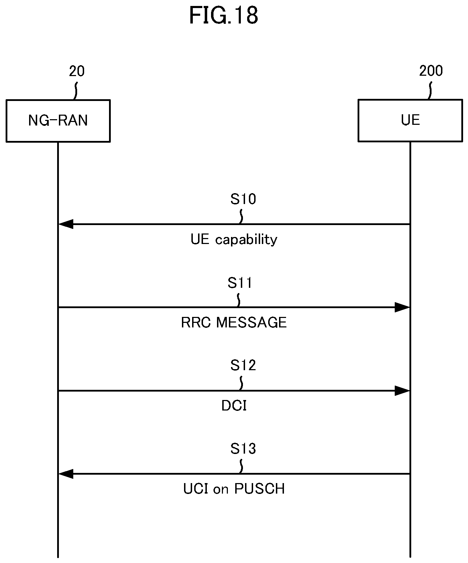

As shown in Fig.18, in step S10, the UE 200 transmits a message containing the UE Capability to the NG-RAN 20. The UE Capability may include an information element regarding the application of the extended range (condition 3 described above).

In step S11, the UE 100 receives the RRC message from the NG-RAN 20. The RRC message may include an information element indicating whether or not to apply the extended range (Condition 1, Condition 2 described above).

In step S12, the UE 200 receives 1 or more DCIs from the NG-RAN 20 via the PDCCH. The format of the DCI may be DCI Format 0_2 (condition 4 described above).

In step S13, the UE 200 transmits the uplink signal using the UCI-multiplexed UL-SCH (PUSCH). In such a case, based on at least one of conditions 1 to 6 described above, the UE 200 may apply the extended range as a possible range of coefficients (beta).

### (7) Operational effects

In the embodiment, the UE 200 applies an extended range (Fig.9 to Fig.14) that includes at least one of values smaller than the predetermined range and larger than the predetermined range as a possible range of coefficients (beta) to be used in rate matching. With such a configuration, multiplexing of the uplink control information (UCI) for the uplink shared channel (UL-SCH, PUSCH) can be properly executed. In particular, such a configuration is useful in cases where the priority of the UCI differs from that of the UL-SCH.

### [Other Embodiments]

Although the contents of the present invention have been described above in accordance with the embodiment, the present invention is not limited to these descriptions, and it is obvious to those skilled in the art that various modifications and improvements are possible.

In the above disclosure, HARQ-ACK was mainly described. However, the above disclosure is not limited to this. UCIs multiplexed to UL-SCH may include CSI Unit 1 or CSI Unit 2. In such cases, the minimum possible value of the coefficient (beta) in the given range may be "1.125." The maximum possible value of the coefficient (beta) in the given range may be "20.00" (TS 38.213 V 16.3.0 section 9.3 "UCI reporting in physical uplink shared channel"). Therefore, the extended range of the coefficient (beta) for CSI Unit 1 and CSI Unit 2 may include values less than "1.125" and may include values greater than "20.00."

Although not specifically mentioned in the above disclosure, the predetermined range may be the range used when the priority of the uplink control information (UCI) is the same as the priority of the uplink shared channel (UL-SCH, PUSCH). Such a range may be referred to as the first range. It may be the range used when the priority of the uplink control information (UCI) is different from the priority of the uplink shared channel (UL-SCH, PUSCH). Such a range may be referred to as the second range.

Although not specifically mentioned in the disclosure above, priorities may be defined as follows: For example, the priority of a HARQ-ACK may be higher than the priority of an SR. The priority for a URLLC (Ultra Reliable and Low Latency Communications) may be higher than the priority for an eMBB (enhanced Mobile Broadband).

The block diagram used to describe the above embodiment (Fig.4) shows a block of functional units. Those functional blocks (structural components) can be realized by a desired combination of at least one of hardware and software. Means for realizing each functional block is not particularly limited. That is, each functional block may be realized using one physically or logically coupled device, or two or more physically or logically separated devices may be directly or indirectly connected (For example, using wired, wireless, etc.) and realized using these multiple devices. The functional block may be realized by combining the software with the one device or the multiple devices.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that makes transmission work is called a transmission unit (transmitting unit) or transmitter. In either case, as described above, the implementation method is not particularly limited.

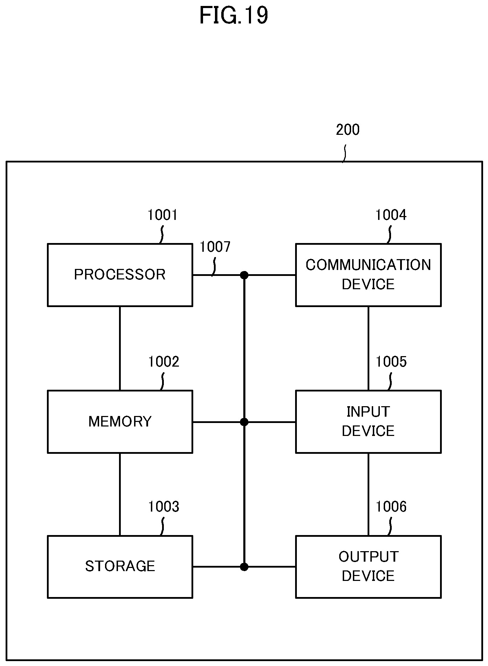

Furthermore, the UE 200 (the device) described above may function as a computer that performs processing of the radio communication method of this disclosure. Fig.19 shows an example of the hardware configuration of the device. As shown in Fig.19, the device may be configured as a computer device including a processor 1001, a memory 1002, a storage 1003, an communication device 1004, an input device 1005, an output device 1006, a bus 1007, etc.

Furthermore, in the following explanation, the term "device" can be replaced with a circuit, device, unit, and the like. The hardware configuration of the device may be configured to include one or more of each device shown in the figure, or it may be configured without some devices.

Each functional block of the device (see Fig.4) is realized by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001 controls the entire computer by, for example, operating the operating system. The processor 1001 may consist of a central processing unit (CPU) including interfaces with peripheral devices, controllers, arithmetic units, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Furthermore, the various processes described above may be performed by one processor 1001 or simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. Memory 1002 may be referred to as a register, cache, main memory, etc. Memory 1002 may store programs (program code), software modules, etc., that are capable of executing a method according to one embodiment of this disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device such as a processor 1001 and a memory 1002 is connected by a bus 1007 for communicating information. Bus 1007 may be configured using a single bus or different buses between devices.

Furthermore, the device may be configured including hardware such as a microprocessor, a digital signal processor (DSP), an application specific integrated circuit (ASIC), a programmable logic device (PLD), a field programmable gate array (FPGA), etc., with which some or all of the functional blocks may be implemented. For example, the processor 1001 may be implemented by using at least one of these hardware.

Also, the notification of information is not limited to the mode/embodiment described in this disclosure and may be made using other methods. For example, the notification of information may be carried out by physical layer signaling (e.g., Downlink Control Information (DCI), Uplink Control Information (UCI), higher layer signaling (e.g., RRC signaling, Medium Access Control (MAC) signaling, notification information (Master Information Block (MIB), System Information Block (SIB)), other signals or a combination thereof. The RRC signaling may also be referred to as an RRC message, e.g., an RRC Connection Setup message, an RRC Connection Reconfiguration message, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc., of each mode/embodiment described in this disclosure may be reordered as long as there is no conflict. For example, the method described in this disclosure uses an illustrative order to present elements of various steps and is not limited to the specific order presented.

The specific operation that is performed by the base station in the present disclosure may be performed by its upper node in some cases. In a network consisting of one or more network nodes with base stations, it is clear that various operations performed for communication with terminals can be performed by the base station and at least one of the other network nodes (For example, but not limited to MME or S-GW) other than the base station. In the above, an example in which there is one network node other than the base station is explained; however, a combination of a plurality of other network nodes (for example, MME and S-GW) may be used.

Information, signals (information, etc.) can be output from an upper layer (or lower layer) to a lower layer (or upper layer). It may be input and output via a plurality of network nodes.

The input/output information can be stored in a specific location (for example, a memory) or can be managed in a management table. Information that is input or output may be overwritten, updated, or appended. The information can be deleted after outputting. The inputted information can be transmitted to another device.

Decisions may be made by a value represented by a single bit (0 or 1), by a truth value (Boolean: true or false), or by comparing numbers (For example, a comparison with a given value).

Each aspect/embodiment described in this disclosure may be used alone, in combination, or switched as execution proceeds. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, if the software is transmitted from a website, server, or other remote source using at least one of wired technology (Coaxial cable, fiber optic cable, twisted pair, Digital subscriber Line (DSL), etc.) and wireless technology (Infrared, microwave, etc.), at least one of these wired and wireless technologies is included within the definition of a transmission medium.

Information, signals, or the like mentioned above may be represented by using any of a variety of different technologies. For example, data, instructions, commands, information, signals, bits, symbols, chips, etc. that may be referred to throughout the above description may be represented by voltage, current, electromagnetic wave, magnetic field or magnetic particle, light field or photon, or any combination thereof.

It should be noted that the terms described in this disclosure and terms necessary for the understanding of this disclosure may be replaced with terms having the same or similar meanings. For example, at least one of the channels and symbols may be a signal (signaling). Also, the signal may be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station" "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

A base station can house one or more (For example, three) cells, also called sectors. In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a base station performing communication services in this coverage and to part or all of the coverage area of at least one of the base station subsystems.

In the present disclosure, the terms "mobile station (Mobile Station: MS)," "user terminal," "user equipment (User Equipment: UE)," "terminal" and the like can be used interchangeably.

A mobile station may be referred to by those skilled in the art as a subscriber station, mobile unit, subscriber unit, wireless unit, remote unit, mobile device, radio communication device, remote device, mobile subscriber station, access terminal, mobile terminal, wireless terminal, remote terminal, handset, user agent, mobile client, client, or some other appropriate term.

At least one of a base station and a mobile station may be called a transmitting device, a receiving device, a communication device, or the like. Note that, at least one of a base station and a mobile station may be a device mounted on a moving body, a moving body itself, or the like. The mobile may be a vehicle (For example, cars, airplanes, etc.), an unattended mobile (For example, drones, self-driving cars, etc.), or a robot (manned or unmanned). At least one of a base station and a mobile station can be a device that does not necessarily move during the communication operation. For example, at least one of a base station and a mobile station may be an Internet of Things (IoT) device such as a sensor.

The base station in this disclosure may also be read as a mobile station (user terminal, hereinafter the same). For example, each mode/embodiment of this disclosure may be applied to a configuration in which communication between a base station and a mobile station is replaced with communication between multiple mobile stations (For example, it may be called Device-to-Device (D2D), Vehicle-to-Everything (V2X), etc.). In this case, the mobile station may have the function of the base station. In addition, words such as "up" and "down" may be replaced with words corresponding to communication between terminals (For example, "side"). For example, terms an uplink channel, a downlink channel, or the like may be read as a side channel.

Similarly, mobile stations in this disclosure may be replaced with base stations. In this case, the base station may have the function of the mobile station.

A radio frame may consist of one or more frames in the time domain. Each one or more frames in the time domain may be referred to as a subframe.

A subframe may further consist of one or more slots in the time domain. A subframe may have a fixed length of time (For example, 1 ms) independent of numerology.

Numerology may be a communication parameter applied to at least one of the transmission and reception of a signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

Slots may consist of one or more symbols (Orthologous Frequency Division Multiplexing (OFDM)) symbols, Single Carrier Frequency Division Multiple Access (SC-FDMA) symbols, etc., in the time domain. A slot may be a unit of time based on the numerology.

A slot may include a plurality of minislots. Each minislot may consist of one or more symbols in the time domain. A minislot may also be called a subslot. A minislot may be composed of fewer symbols than slots. A PDSCH (or PUSCH) transmitted in units of time larger than the minislot may be referred to as a PDSCH (or PUSCH) mapping type A. A PDSCH (or PUSCH) transmitted using the minislot may be referred to as a PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called the transmission time interval (TTI), multiple consecutive subframes may be called TTI, or one slot or one minislot may be called TTI. That is, at least one of the subframes and TTI may be a subframe (1 ms) in existing LTE, a period shorter than 1 ms (For example, 1-13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

If one slot or one minislot is called a TTI, one or more TTIs (That is, one or more slots or one or more minislots) may be the minimum unit of time for scheduling. In addition, the number of slots (number of minislots) constituting the minimum unit of time for scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTIs that are usually shorter than TTI may be called shortened TTI, short TTI, partial or fractional TTI, shortened subframe, short subframe, minislot, subslot, slot, etc.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

A resource block (RB) is a resource allocation unit in the time and frequency domains, and may include one or more consecutive subcarriers in the frequency domain. The number of subcarriers included in RB may be, for example, twelve, and the same regardless of the topology. The number of subcarriers included in the RB may be determined based on the neurology.

The time domain of the RB may also include one or more symbols, and may be one slot, one minislot, one subframe, or one TTI long. One TTI, one subframe, and the like may each consist of one or more resource blocks.

One or more RBs may be referred to as Physical RB (PRB), Sub-Carrier Group (SCG), Resource Element Group (REG), PRB pair, RB pair, and the like.

A resource block may also be composed of one or more Resource Elements (RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be identified by an index of RBs relative to the common reference point of the carrier. PRB may be defined in BWP and numbered within that BWP.

BWP may include UL BWP (UL BWP) and DL BWP (DL BWP). For a UE, one or more BWPs may be set within a carrier.

At least one of the configured BWPs may be active, and the UE may not expect to transmit and receive certain signals/channels outside the active BWP. Note that "cell," "carrier," and the like in this disclosure may be read as "BWP."

The above-described structures such as a radio frame, subframe, slot, minislot, and symbol are merely examples. For example, configurations such as the number of subframes contained in a radio frame, the number of subframes or slots per radio frame, the number of minislots contained in a slot, the number of symbols and RBs contained in a slot or minislot, the number of subcarriers contained in an RB, and the number of symbols, symbol length, and Cyclic Prefix (CP) length in a TTI can be varied variably.

The terms "connected," "coupled" or any variation thereof mean any connection or combination, directly or indirectly, between two or more elements and may include the presence of one or more intermediate elements between two elements that are "connected" or "coupled" to each other. The connection or connection between elements may be physical, logical or a combination thereof. For example, "connection" may be read as "access." As used in this disclosure, two elements may be considered to be "connected" or "coupled" to each other using at least one of one or more wire, cable and printed electrical connections and, as a few non-limiting and non-comprehensive examples, electromagnetic energy with wavelengths in the radio frequency domain, the microwave domain and the optical (both visible and invisible) domain.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to elements using designations such as "first" or "second" as used in this disclosure does not generally limit the amount or order of those elements. Such designations can be used in the present disclosure as a convenient way to distinguish between two or more elements. Thus, references to the first and second elements do not imply that only two elements can be adopted there or that the first element must in some way precede the second element.

In the present disclosure, the used terms "include," "including," and variants thereof are intended to be inclusive in a manner similar to the term "comprising." Furthermore, the term "or (or)" as used in this disclosure is not intended to be an exclusive OR.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" and "determination" may include regarding some action as "judgment" and "determination." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

- 10: radio communication system
- 20: NG-RAN
- 100: gNB
- 200: UE
- 210: radio signal transmission and reception unit
- 220: amplifier unit
- 230: modulation and demodulation unit
- 240: control signal and reference signal processing unit
- 250: encoding/decoding unit
- 260: data transmission and reception unit
- 270: control unit
- 1001: processor
- 1002: memory
- 1003: storage
- 1004: communication device
- 1005: input device
- 1006: output device
- 1007: bus

## Claims

1. A terminal comprising:
a control unit that multiplexes an uplink control information on an uplink shared channel; and
a communication unit that transmits an uplink signal using the uplink shared channel on which the uplink control information is multiplexed; wherein
the control unit multiplies a number of bits constituting the uplink control information by a factor in a rate matching, and
the control unit applies an extended range including at least one of a value smaller than a predetermined range and a value larger than the predetermined range as the range in which the factor can be taken.

2. The terminal according to claim 1, wherein
the control unit applies the extended range when the priority of the uplink control information is different from the priority of the uplink shared channel.

3. The terminal of claim 1 or claim 2, wherein
the control unit applies the extended range based on a radio resource control message or downlink control information.

4. The terminal according to any one of claims 1 to 3, wherein
the control unit applies the extended range based on a capability of the terminal.

5. The terminal according to any one of claims 1 to 4, wherein
the control unit applies the extended range based on a value of a scaling factor that is multiplied to a radio resource available in the transmission of the uplink control information.
